(19)

Europäisches Patentamt
European Patent Office
Office européen des brevets

(11) **EP 3 667 858 A1**

(12) **EUROPEAN PATENT APPLICATION**
published in accordance with Art. 153(4) EPC

(43) Date of publication:
**17.06.2020 Bulletin 2020/25**

(21) Application number: **18858956.8**

(22) Date of filing: **21.05.2018**

(51) Int Cl.:
**H02J 3/36** (2006.01)          **H02M 7/00** (2006.01)

(86) International application number:
**PCT/CN2018/087664**

(87) International publication number:
**WO 2019/056783 (28.03.2019 Gazette 2019/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.09.2017   CN 201710847066**

(71) Applicants:
• **NR Electric Co., Ltd.**
**Nanjing, Jiangsu 211106 (CN)**
• **NR Engineering Co., Ltd.**
**Jiangsu 211106 (CN)**

(72) Inventors:
• **LU, Yu**
**Nanjing**
**Jiangsu 211106 (CN)**
• **WANG, Nannan**
**Nanjing**
**Jiangsu 211106 (CN)**
• **DONG, Yunlong**
**Nanjing**
**Jiangsu 211106 (CN)**

• **TIAN, Jie**
**Nanjing**
**Jiangsu 211106 (CN)**
• **LI, Haiying**
**Nanjing**
**Jiangsu 211106 (CN)**
• **JIANG, Chongxue**
**Nanjing**
**Jiangsu 211106 (CN)**
• **WANG, Jiacheng**
**Nanjing**
**Jiangsu 211106 (CN)**
• **DING, Jiudong**
**Nanjing**
**Jiangsu 211106 (CN)**
• **HU, Zhaoqing**
**Nanjing**
**Jiangsu 211106 (CN)**
• **LU, Jiang**
**Nanjing**
**Jiangsu 211106 (CN)**

(74) Representative: **Kurig, Thomas**
**Becker & Kurig Partnerschaft**
**Patentanwälte PartmbB**
**Bavariastrasse 7**
**80336 München (DE)**

(54) **CONVERTER CONTROL METHOD**

(57)    The present invention discloses a converter control method applied in a voltage source converter. An AC side of the voltage source converter is connected to an AC system by means of a converter transformer, and a line-side voltage and a valve-side current are collected to realize closed-loop current control of the converter. The control method provided in the present invention can prevent a control failure caused by CT saturation at a line-side bushing of a converter transformer, and no additional measurement device is required, thereby achieving higher economic efficiency.

Fig. 4

EP 3 667 858 A1

Printed by Jouve, 75001 PARIS (FR)

# Description

## Technical Field

The present invention relates to the technical field of power electronics, in particular to a converter control method.

## Background

Flexible DC transmission can independently and quickly control active power and wattless power by means of a voltage source converter, thus improving system stability, restraining fluctuations of system frequencies and voltages, and improving the steady-state performance of grid-connected AC systems. With the increasing depletion of fossil energy and the increasing pressure to the environment, China and even the world are facing strategic adjustments to energy structures, and large-scale development and utilization of new energy are imperative.

The AC side of a converter of a flexible DC transmission system is connected to a AC system through a converter transformer, and the line-side active power and wattless power of the converter transformers are generally controlled as set values. When a line-side bushings CT of the converter transformers is used, the line-side bushings CT will be saturated due to a large zero-sequence current generated during ground faults of the AC systems, which will cause control failures in severe cases, and consequentially, the failure of fault ride-through is caused. One solution is to change the line-side bushings CT to an optical CT, but such solution will increase the costs. To solve this problem, the present invention provides an economic control method to prevent the control failure caused by CT saturation at the lineside bushings of the converter transformers.

## Summary

The objective of the present invention is to provide a converter control method which adopts a line-side voltage and a valve-side current of a converter transformer to realize closed-loop current control of the converter, thus preventing the control failure caused by CT saturation at a line-side bushing of the converter transformer.

The technical solution adopted by the present invention to achieve the above-mentioned objective is as follows:

A converter control method is applied to a voltage source converter having an AC side connected to an AC system via a converter transformer, wherein closed-loop current control of the converter is capable of being realized by means of a line-side voltage and a valve-side current. The method comprises the following steps:

　　1) Collecting a line-side three-phase voltage and a valve-side three-phase current of the converter transformer;

　　2) Performing a linear transformation on the valve-side three-phase current to obtain an equivalent line-side three-phase current; and

　　3) Adopting the line-side three-phase voltage and the equivalent line-side three-phase current to realize the closed-loop current control of the converter.

According to the converter control method, the linear transformation in step (2) is determined by a wiring mode of the converter transformer and is performed as follow:

$$\begin{bmatrix} i_{saeq} \\ i_{sbeq} \\ i_{sceq} \end{bmatrix} = C_{DY} \begin{bmatrix} i_{vca} \\ i_{vcb} \\ i_{vcc} \end{bmatrix}$$

Where $i_{saeq}$, $i_{sbeq}$, and $i_{sceq}$ are instantaneous values of the equivalent line-side three-phase current, $i_{vca}$, $i_{vcb}$, and $i_{vcc}$ are instantaneous values of the valve-side three-phase current, and $C_{DY}$ is a linear transformation matrix adopted for the linear transformation.

According to the converter control method, during a normal operation, the line-side voltage and the valve-side current are adopted to realize the closed-loop current control of the converter, and when line-side current CT saturation is detected, the line-side voltage and the valve-side current are adopted to realize the closed-loop current control of the converter.

According to the converter control method, the basis for determining whether the line-side current CT saturation is detected is as follows: the error between the line-side current and the equivalent line-side three-phase current obtained by implementing the linear transformation on the valve-side three-phase current is greater than a set current error value $I_{set}$, and a zero-sequence voltage of the line-side voltage is greater than a set zero-sequence voltage value $U0_{set}$.

By adopting the above solution, the present invention has the following beneficial effects:

　　(1) According to the converter control method, the line-side voltage and the valve-side current of the converter transformer are adopted to realize the closed-loop current control of the converter, so that a control failure caused by CT saturation at a line-side bushing of the converter transformer is prevented.

　　(2) According to the converter control method, no additional measurement device is required, so that higher economic efficiency is achieved.

Brief Description of the Drawings

Fig. 1 is a configuration diagram of measurement points of a flexible DC system;
Fig. 2 is a schematic diagram of a wiring mode YD11 of a converter transformer;
Fig. 3 is a flow diagram of a converter control method;
Fig. 4 is a control block diagram of the converter control method;
Fig. 5 is a control block diagram of another converter control method.

Detailed Description of Embodiments

The technical solution of the present invention is expounded below in combination of the accompanying drawings and specific embodiments.

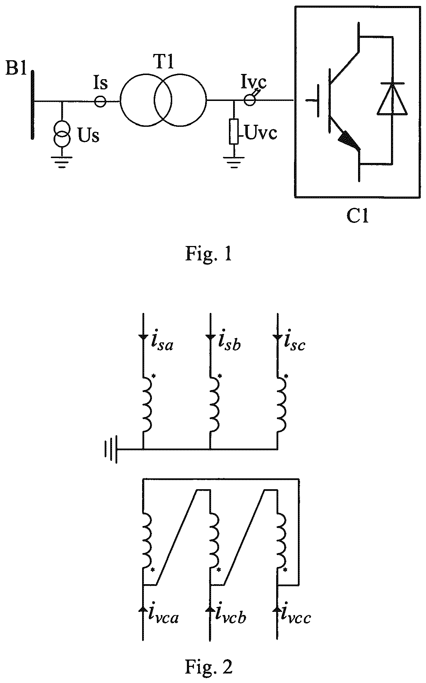

Fig. 1 shows a configuration diagram of measurement points of a flexible DC system. An AC side of a voltage source converter C1 is connected to a bus B1 of an AC system by means of a converter transformer T1 having a line side provided with an electromagnetic voltage transformer $U_S$ and an electromagnetic current transformer Is as well as a valve side provided with an electronic voltage transformer Uvc and an electronic current transformer Ivc. Line-side active power and wattless power of the converter transformer are generally controlled as set values, so the measured values of the voltage transformer Us and the current transformer Is are typically adopted. However, the dynamic range of a current transformer Is for control is up to 2 times in general, and saturation is likely to occur during a failure. The dynamic range of the electronic current transformer Ivc is up to 15 times in general, and the saturation is unlikely to occur.

Fig. 2 shows a schematic diagram of a wiring mode YD11 of the converter transformer to illustrate that a linear transformation matrix adopted for linear transformation is determined by the wiring mode of the converter transformer. According to the electromagnetic induction principle of the transformer and the Kirchhoff s law, the following relations can be obtained:

$$\begin{cases} N_2 i_{vca} = N_1(i_{sa} - i_{sb}) \\ N_2 i_{vcb} = N_1(i_{sb} - i_{sc}) \\ N_2 i_{vcc} = N_1(i_{sc} - i_{sa}) \end{cases}$$

A transformation ratio coefficient k is defined as

$$k = \frac{N_2}{N_1}$$

The following linear transformation relation is obtained:

$$\begin{bmatrix} i_{sa} \\ i_{sb} \\ i_{sc} \end{bmatrix} = k \begin{bmatrix} 1 & 0 & -1 \\ -1 & 1 & 0 \\ 0 & -1 & 1 \end{bmatrix} \begin{bmatrix} i_{vca} \\ i_{vcb} \\ i_{vcc} \end{bmatrix}$$

Thus, the linear transformation matrix $C_{DY\text{-}11}$ according to the wiring mode YD11 of the converter transformer is:

$$C_{DY\text{-}11} = k \begin{bmatrix} 1 & 0 & -1 \\ -1 & 1 & 0 \\ 0 & -1 & 1 \end{bmatrix}$$

Similarly, the linear transformation matrix $C_{DY\text{-}1}$ according to the wiring mode YD1 of the converter transformer is:

$$C_{DY\text{-}1} = k \begin{bmatrix} 1 & -1 & 0 \\ 0 & 1 & -1 \\ -1 & 0 & 1 \end{bmatrix}$$

Similarly, linear transformation matrices according to other wiring modes of the converter transformer can also be obtained.

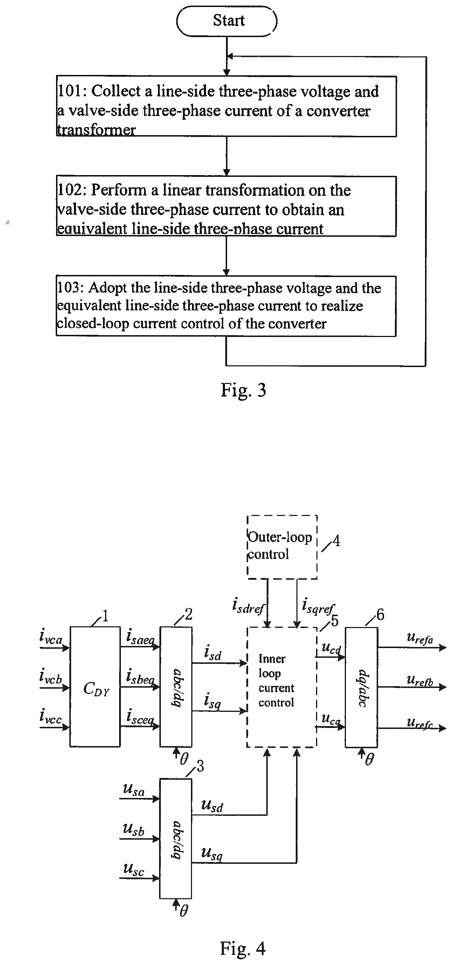

Fig. 3 shows a flow diagram of a converter control method of the present invention. A line-side voltage and a valve-side current are collected to realize closed-loop current control of the converter. The method comprises the following steps:

101: A line-side three-phase voltage and a valve-side three-phase current of the converter transformer are collected, that is, measured values of the voltage transformer $U_S$ and the current transformer $I_{VC}$ shown in Fig. 1 are collected;

102: Linear transformation is performed on the valve-side three-phase current to obtain an equivalent line-side three-phase current, that is, an appropriate transformation matrix is selected according to the wiring mode of the converter transformer to calculate the equivalent line-side three-phase current from the valve-side three-phase current; for instance, when the wiring mode of the converter transformer is YD11, the transformation matrix $C_{DY\text{-}11}$ is adopted; and

103: The line-side three-phase voltage and the equivalent line-side three-phase current are adopted to realize the closed-loop current control of the converter, and after the equivalent line-side three-phase current is obtained, the converter control is realized according to an original inner-loop control strategy.

Fig. 4 shows a control block diagram of the converter control method of the present invention. Valve-side currents $i_{vca}$, $i_{vcb}$, and $i_{vcc}$ of the converter transformer are collected first, and then a linear transformation matrix $C_{DY}$ is used to obtain equivalent line-side three-phase currents $i_{saeq}$, $i_{sbeq}$, and $i_{sceq}$ in a control link 1; afterwards, a park transformation is performed on the equivalent line-side three-phase currents to obtain d-q axis components $i_{sd}$ and $i_{sq}$ in a control link 2, and a park transformation is performed on line-side voltages $u_{sa}$, $u_{sb}$, and $u_{sc}$ of the converter transformer in a control link 3 to obtain d-q axis components $u_{sd}$ and $u_{sq}$ serving as inputs of a control link 5. The control link 5 is an inner-loop current control and adopts vector control. The control link 5 receives instructions about active current $i_{sdref}$ and wattless current $i_{sqref}$ of an outer loop controller in a control link 4, and generates control signals $u_{cd}$ and $u_{cq}$ of the converter according to current and voltage responses output from the control link 2 and the control link 3. Finally, three-phase voltage reference value signals $u_{refa}$, $u_{refb}$, and $u_{refc}$ of the converter are obtained in an inverse park transformation link 6 (i.e., control link 6), and the current control of the converter is realized by means of the line-side voltages and the valve-side currents finally.

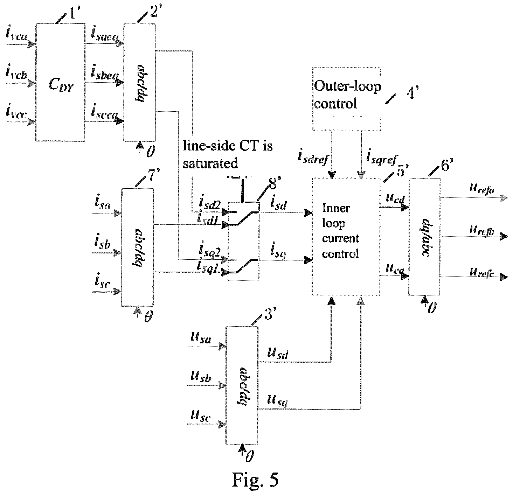

Fig. 5 is a control block diagram of another converter control method of the present invention. After line-side currents $i_{sa}$, $i_{sb}$, and $i_{sc}$ are collected, a park transformation is performed on the equivalent line-side three-phase currents in a control link 7' to obtain d-q axis components $i_{sdl}$ and $i_{sql}$; after the valve-side currents $i_{vca}$, $i_{vcb}$, and $i_{vcc}$ of the converter transformer are collected, the linear transformation matrix $C_{DY}$ is adopted to obtain the equivalent line-side three-phase currents $i_{saeq}$, $i_{sbeq}$, and $i_{sceq}$ in a control link 1'; then a park transformation is performed on the equivalent line-side three-phase currents to obtain d-q axis components $i_{sd2}$ and $i_{sq2}$ in a control link 2'; and the line-side voltages $u_{sa}$, $u_{sb}$, and $u_{sc}$ of the converter transformer are collected and are subjected to a park transformation in a control link 3' to obtain d-q axis components $u_{cd}$ and $u_{cq}$ serving as inputs of a control link 5'. Whether a line-side CT is saturated is determined as follows: if the error between the line-side current and the equivalent line-side three-phase current obtained by implementing the linear transformation on the valve-side three-phase current is greater than a set current error value $I_{set}$, and a zero-sequence voltage of the line-side voltages is greater than a set zero-sequence voltage value $U0_{set}$, the line-side CT is saturated, and if not, the line-side CT is unsaturated. The set current error value $I_{set}$ may be K times of a rated current, wherein K ranges from 0 to 1 and is preferably 0.1; and the set zero-sequence voltage value $U0_{set}$ is M times of a rated voltage, wherein M ranges from 0 to 1 and is preferably 0.3. In a control link 8', $i_{sdl}$ and $i_{sql}$ are served as the inputs of the control link 5' when the line-side CT is unsaturated, and $i_{sd2}$ and $i_{sq2}$ are served as the inputs of the control link 5' when the line-side CT is saturated. The control link 5' is an inner-loop current control and adopts vector control. The control link 5' receives the instructions about the active current $i_{sdref}$ and the wattless current $i_{sqref}$ of an outer loop controller in a control link 4', and generates the control signals $u_{cd}$ and $u_{cq}$ of the converter according to current and voltage responses output from the control link 8' and the control link 3'; and finally, the three-phase voltage reference value signals $u_{refa}$, $u_{refb}$, and $u_{refc}$ of the converter are obtained in an inverse park transformation link 6' (i.e., control link 6'), and finally, the current control of the converter is realized by means of the line-side voltages and the line-side currents during normal operation and is realized by means of the line-side voltages and the valve-side currents when the line-side CT is saturated.

The above embodiments are only used for explaining the technical idea of the present invention, and are not used for limiting the protection scope of the present invention. All changes made on the basis of the technical solution according to the technical idea of the present invention should also fall within the protection scope of the present invention.

**Claims**

1. A converter control method, applicable to a voltage source converter having an AC side connected to an AC system via a converter transformer, wherein and realizingclosed-loop current control of the converter is capable of being realized by means of collection of a line-side voltage and a valve-side current, and the method comprises the following steps:

   1) collecting a line-side three-phase voltage and a valve-side three-phase current of the converter transformer;
   2) performing a linear transformation on the valve-side three-phase current to obtain an equivalent line-side three-phase current; and
   3) adopting the line-side three-phase voltage and the equivalent line-side three-phase current to realize the closed-loop current control of the converter.

2. The converter control method according to claim 1, wherein the linear transformation in step 2) is determined by a wiring mode of the converter transformer and is performed as follows:

$$\begin{bmatrix} i_{saeq} \\ i_{sbeq} \\ i_{sceq} \end{bmatrix} = C_{DY} \begin{bmatrix} i_{vca} \\ i_{vcb} \\ i_{vcc} \end{bmatrix}$$

where $i_{saeq}$, $i_{sbeq}$, and $i_{sceq}$ are instantaneous values of the equivalent line-side three-phase current, $i_{vca}$, $i_{vcb}$, and $i_{vcc}$ are instantaneous values of the valve-side three-phase current, and $C_{DY}$ is a linear transformation matrix adopted for the linear transformation.

3. The converter control method according to claim 1, wherein during a normal operation, the line-side voltage and a line-side current are adopted to realize the closed-loop current control of the converter; and when line-side current CT saturation is detected, the line-side voltage and the valve-side current are adopted to realize the closed-loop current control of the converter.

4. The converter control method according to claim 3, wherein a basis for determining whether the line-side current CT saturation is detected is as follows: an error between the line-side current and the equivalent line-side three-phase current obtained by implementing the linear transformation on the valve-side three-phase current is greater than a set current error value $I_{set}$, and a zero-sequence voltage of the line-side voltage is greater than a set zero-sequence voltage value $U0_{set}$.

Fig. 1

Fig. 2

Start

101: Collect a line-side three-phase voltage and a valve-side three-phase current of a converter transformer

102: Perform a linear transformation on the valve-side three-phase current to obtain an equivalent line-side three-phase current

103: Adopt the line-side three-phase voltage and the equivalent line-side three-phase current to realize closed-loop current control of the converter

Fig. 3

Fig. 4

Fig. 5

## INTERNATIONAL SEARCH REPORT

| International application No. |
| --- |
| **PCT/CN2018/087664** |

### A. CLASSIFICATION OF SUBJECT MATTER

H02J 3/36(2006.01)i;   H02M 7/00(2006.01)i

According to International Patent Classification (IPC) or to both national classification and IPC

### B. FIELDS SEARCHED

Minimum documentation searched (classification system followed by classification symbols)

H02J; H02M

Documentation searched other than minimum documentation to the extent that such documents are included in the fields searched

Electronic data base consulted during the international search (name of data base and, where practicable, search terms used)

CNTXT; CNABS; VEN; CNKI: 电压, 内环, 次级侧, 电流, 外环, 变换, 互感器, 损坏, 阀侧, 变压器, 副边, 等效, 换流, 闭环, 原边, 一次侧, 网侧, 二次侧, 老化, 换算, 转换, 故障, 饱和, 折算, voltage, current, external, ring, inverter, transformer, primary, side, secondary, conversion, CT

### C. DOCUMENTS CONSIDERED TO BE RELEVANT

| Category* | Citation of document, with indication, where appropriate, of the relevant passages | Relevant to claim No. |
| --- | --- | --- |
| PX | CN 107612014 A (NARI-RELAYS ELECTRIC CO., LTD. ET AL.) 19 January 2018 (2018-01-19)<br>claims 1 and 2 | 1-4 |
| X | CN 102967842 A (CHONGQING UNIVERSITY ET AL.) 13 March 2013 (2013-03-13)<br>description, paragraphs [0101]-[0148], and figures 1-4 | 1-4 |
| A | US 2015236759 A1 (TEXAS INSTRUMENTS INC.) 20 August 2015 (2015-08-20)<br>entire document | 1-4 |
| A | CN 102739025 A (SHENZHEN INCREASE PERFECT S & T DEVELOPMENT CO., LTD.) 17 October 2012 (2012-10-17)<br>entire document | 1-4 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 July 2018** | **14 August 2018** |

| Name and mailing address of the ISA/CN | Authorized officer |
| --- | --- |
| **State Intellectual Property Office of the P. R. China**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/087664**

| Patent document cited in search report | | | Publication date (day/month/year) | Patent family member(s) | | | Publication date (day/month/year) |
|---|---|---|---|---|---|---|---|
| CN | 107612014 | A | 19 January 2018 | None | | | |
| CN | 102967842 | A | 13 March 2013 | WO | 2014063570 | A1 | 01 May 2014 |
| | | | | CN | 102967842 | B | 05 November 2014 |
| | | | | US | 2015268290 | A1 | 24 September 2015 |
| US | 2015236759 | A1 | 20 August 2015 | US | 9544027 | B2 | 10 January 2017 |
| CN | 102739025 | A | 17 October 2012 | None | | | |

Form PCT/ISA/210 (patent family annex) (January 2015)